# EUROPEAN PATENT SPECIFICATION

(11) **EP 2 434 027 B1**
(45) Date of publication and mention of the grant of the patent: **19.08.2015**
(21) Application number: 09844949.9
(22) Date of filing: 29.09.2009
(51) Int. Cl.: C22C 38/00, C22C 38/14, C22C 38/58

(54) **STEEL MATERIAL FOR HIGH HEAT INPUT WELDING**
STAHLMATERIAL ZUM SCHWEISSEN MIT HOHER WÄRMEBELASTUNG
MATÉRIAU EN ACIER APTE AU SOUDAGE AVEC UN APPORT CALORIFIQUE ÉLEVÉ

(30) Priority: 22.05.2009 JP 2009123936
(43) Date of publication of application: 28.03.2012
(73) Proprietor: JFE Steel Corporation, Tokyo 100-0011 (JP)
(72) Inventor: YOKOTA, Tomoyuki, Tokyo 100-0011 (JP); NISHIMURA, Kimihiro, Tokyo 100-0011 (JP); SHIKANAI, Nobuo, Tokyo 100-0011 (JP)
(74) Representative: Stebbing, Timothy Charles
(86) International application number: PCT/JP2009/067301
(87) International publication number: WO 2010/134220

(56) References cited:
- EP-A1- 1 746 175
- EP-A2- 1 375 681
- JP-A- 62 174 324
- JP-A- 2003 306 749
- JP-A- 2006 265 577
- JP-A- 2007 277 681
- JP-A- 2008 095 152
- JP-A- 2008 163 446
- JP-A- 2008 255 458
- JP-A- 2009 041 079

## Description

### [Technical Field]

The present invention relates to a structural steel plate used for constructing various steel structures in fields such as ships, architecture and civil engineering, and more particularly to a steel plate suitable for high heat input welding where a welding heat input exceeds 300 kJ/cm.

### [Background Art]

In general, the steel structures used in fields such as ships, architecture and civil engineering are constructed in desired shapes by welding process. Accordingly, these steel structures are required to exhibit, not to mention the excellent base plate toughness (or parent-metal toughness), excellent weld-zone toughness (hereinafter called HAZ (Heat Affected Zone) toughness) from a viewpoint of ensuring security.

Recently, the above-mentioned ships and steel structures are steadily becoming large-sized. Accordingly, positive efforts have been made so as to increase the strengths or wall thicknesses of steel materials which are used for constructing such large-scale structures (ships etc.). Along with such efforts, in weld-fabrication, high-efficiency high heat input welding such as submerged arc welding, electrogas arc welding or electroslag welding has been adopted. Accordingly, a steel plate which exhibits excellent HAZ toughness becomes necessary even when the heat input is extremely large.

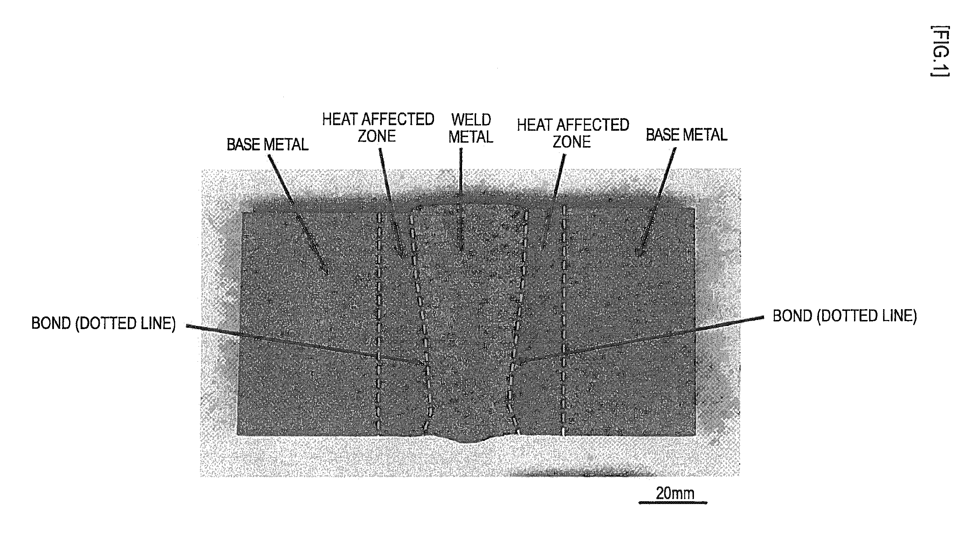

Here, the structure of the weld is explained. Fig. 1 illustrates a macrostructure of a cross section of steel weld. A weld metal part is present at the center of the weld zone, wherein the weld metal is formed in such a manner that both a melted parent metal and deposit metal which is generated from welding consumables are mixed substantially uniformly in a molten state and the mixture is solidified. On both sides of the weld metal, a HAZ where the microstructures and properties of a base plate are degenerated by welding thermal cycle is present, and the base plate is present on both sides of the HAZs. A boundary (indicated by a broken line in the drawing) between the weld metal and the HAZ is referred to as "bond" in general. In the whole HAZ, the area adjacent to the bond is particularly heated to a high temperature close to a melting point and, thereafter, is rapidly cooled. Therefore, this area exhibits the highest hardness in many cases.

It is known that when a weld heat input becomes high, austenite grains of HAZ become coarse so that toughness is remarkably lowered. Heretofore, many countermeasures have been studied to prevent the lowering of HAZ toughness caused by such high heat input welding. For example, in a technique which has been already put into practice, TiN is finely dispersed in steel so that TiN prevents austenite grains from becoming coarse or TiN is used as ferrite nucleation sites. Further, there has been also developed a technique which aims at acquiring effects similar to the above-mentioned effects by dispersing oxide of Ti in steel (see patent document 1, for example).

However, in the above-mentioned technique which utilizes TiN, when high heat input is applied to the heat affected zone, the welded heat affected zone is heated to a TiN dissolution temperature and hence, the technique has a drawback that TiN is decomposed so that the above-mentioned dispersion effect is dissipated and a drawback that the microstructure becomes brittle due to solute Ti and solute N which are generated by decomposition of TiN thus remarkably lowering HAZ toughness. Further, the technique which utilizes Ti oxide has a drawback that it is difficult to uniformly and finely disperse oxides in base plate.

As a technique which copes with such drawbacks, for example, patent document 2 discloses a technique where, to enhance HAZ toughness to which high heat input welding exceeding 400 kJ/cm is applied, Ca addition for sulfide shape control is properly adjusted so that CaS is crystallized, and CaS is effectively used as ferrite nucleation sites. Since CaS is crystallized at a low temperature compared to oxide, it can be finely dispersed in base plate and, further, ferrite nucleation sites such as MnS, TiN or BN are finely dispersed in steel using CaS as nuclei during cooling on welding. Therefore, microstructures of HAZ can be formed into fine ferrite and pearlite whereby HAZ can exhibit high toughness.

Further, with respect to a technique which utilizes TiN, there has been proposed a technique where, for preventing an area adjacent to a bond from becoming brittle due to the increase of solute N along with dissolution of TiN, B is added to steel so as to fix solute N. However, although the addition of B is effective for preventing brittleness of the area adjacent to the bond, it has a defect that B causes brittleness at a position away from the bond to the contrary.

In view of the above, patent document 3 discloses a technique which enhances toughness of all of weld metal, a whole HAZ areas as follows. That is, a quantity of B added to steel is set to a level by which B does not adversely influence toughness of steel, a quantity of B sufficient for suppressing ferrite side plates transformation from an austenite grain boundary is added to a weld metal, and minimum quantity of B necessary for fixing solute N generated by decomposition of TiN is diffused into the HAZ area from the weld metal.

Due to the development of techniques described in patent document 2 and patent document 3, lowering of toughness caused by high heat input welding can be suppressed to some extent. However, from studies made thereafter, it was found that with respect to steel which has a yield stress of 460MPa or more and to which a relatively large quantity of C or alloy element is added, when high heat input weldingover 300 kJ/cm is applied, several volume% of hard, island shaped microstructure called Martensite-Austenite constituents (MA) is formed in a HAZ adjacent to the bond, and this hard brittle microstructure impedes the further improvement of toughness of the weld. Accordingly, to improve the toughness of the high heat input weld of high strength steel, it is necessary to suppress the generation of MA in the HAZ adjacent to the bond in addition to the fine dispersion of ferrite nucleation sites and the reduction of solute N and solute B.

With respect to the above-mentioned technique for reducing MA, for example, patent document 4 discloses a technique where the generation of MA can be suppressed by decreasing the distribution of C in untransformed austenite by lowering a transformation start temperature with the increase of Mn content simultaneously with the decreasing of C content. Further, patent document 5 discloses that besides the decreasing of both C and Si contents, the decreasing of P content is also effective for the reduction of MA volume. Further, patent document 6 discloses a technique where, by positively adding Cr, Mo or V, bainite transformed at low temperature can be generated even when a cooling speed is slow, and film-like MA which are not in a blocky shape can be generated and, at the same time, MA which are generated as ultra low C can be made fine. Further, patent document 7 discloses a technique where an upper limit is provided with respect to a volume fraction of MA in the HAZ.

### [Prior art document]

### [Patent document]

[Patent document 1] JP-A-57-051243
[Patent document 2] Japanese Patent 3546308 (JP-A-2002-256379)
[Patent document 3] JP-A-2005-2476
[Patent document 4] JP-A-2007-084912
[Patent document 5] JP-A-2008-163446
[Patent document 6] Japanese Patent 3602471
[Patent document 7] JP-B-06-076615 (JP-A-62-214126)
[Patent document 8] JP 2008 255 458
[Patent document 9] JP 2008 095 152
[Patent document 10] JP 2009 041 079

### [Summary of the Invention]

### [Task to be solved by the Invention]

Although the technique described in patent document 4 can decrease MA volume fraction, it is necessary to add 0.03 mass% or more Nb to steel for compensating for lowering of strength due to decreasing of C and hence, there exists a possibility of the generation of martensite islands due to the addition of Nb. Further, this technique uses Ti oxide as transformation nucleation sites and hence, the technique has a drawback in the fine dispersion of transformation nucleation sites.

Further, the technique described in patent document 5 can also decrease MA volume fraction, and can finely disperse ferrite nucleation sites with an addition of a proper quantity of Ca. However, the addition of Ni is indispensable thus giving rise to a drawback that an alloy cost is high.

The technique described in patent document 6 is a technique which is focused on a control of the configuration of MA rather than the reduction of volume fraction and hence, the drastic improvement of HAZ toughness for a high heat input welding is difficult.

Further, the technique described in patent document 7 is directed to welding of 130 kJ/cm or less different from high heat input welding exceeding 300 kJ/cm to which the present invention is directed so that a cooling rate of a welded heat affected zone is slow. Accordingly, the technique described in patent document 7 is not directly applicable to high heat input welding where a condition that MA is more stable.

Accordingly, it is an object of the present invention to provide a steel plate having a yield stress of 460MPa or more which exhibits excellent HAZ toughness even when weld heat input exceeds 300 kJ/cm by suppressing the generation of MA phase in HAZ, especially for an area adjacent to a bond.

### [Means for solving the Problem]

Inventors of the present invention, to reduce a volume fraction of MA generated in a HAZ adjacent to a bond when high heat input over 300 kJ/cm is applied to a high strength steel plate having a yield stress of 460MPa or more, have extensively studied the relationship between an alloy element and a volume fraction of MA. As a result, the inventors have found that by positively adding Mn having an effect of increasing strength of steel without generating MA and also by decreasing P content as an impurity element to 0.012 mass% or less, an untransformed austenite generated during cooling after high heat input welding can be easily decomposed into cementite whereby the volume fraction of MA can be reduced. As a result, inventors have completed the present invention.

That is, the inventors of the present invention have acquired a finding that, in place of increasing C or other alloy elements conventionally known to have an effect of increasing strength, positive Mn addition has the same effect without increasing MA volume fraction. In addition, the inventors of the present invention have also acquired new finding which is not known conventionally that by decreasing P content as an impurity element up to 0.012 mass% or less, untransformed austenite generated during cooling after high heat input welding can be easily decomposed into cementite. As a result, the inventors of the present invention have found that a MA volume fraction can be reduced even when the strength of the steel plate is increased, and have completed the present invention.

That is, the present invention is directed to a high heat input welding steel material having the composition which contains:
0.035 to 0.68 mass% C,
0.01 to 0.15 mass% Si,
2.0 to 2.3 mass% Mn,
0.012 mass% or less P,
0.0005 to 0.0040 mass% S,
0.005 to 0.1 mass% Al,
0.005 to 0.02 mass% Nb,
0.003 to 0.03 mass% Ti,
0.0025 to 0.0070 mass% N,
0.0003 to 0.0025 mass% B,
optionally 0.2 mass% or less V,
optionally one, two or more kinds of elements selected from a group consisting of 1.0 mass% or less Cu, 1.0 mass% or less Ni, 0.4 mass% or less Cr, and 0.4 mass% or less Mo,
optionally one, two or more kinds of elements selected from a group consisting of 0.0005 to 0.0050 mass% Ca, 0.0005 to 0.0050 mass% Mg, 0.001 to 0.02 mass% Zr, and 0.001 to 0.02 mass% REM,
and Fe and unavoidable impurities as a balance, wherein the composition contains the above-mentioned components such that a carbon equivalent Ceq expressed by a following formula (1) falls within a range of 0.33 to 0.45, and martensite islands in the structure of a heat affected zone in the vicinity of a bond when high heat input welding whose welding heat input quantity exceeds 300 kJ/cm is applied is 1vol% or less

   Ceq=C+Mn/6+(Cr+Mo+V)/5+(Cu+Ni)/15 (1),

   wherein the respective element symbols in the formula indicate contents (mass%) of the elements.

### [Advantage of the Invention]

According to the present invention, it is possible to acquire a steel plate which exhibits excellent HAZ toughness even when high heat input welding exceeding 300 kJ/cm is applied. Accordingly, the steel plate of the present invention is preferably applicable to ships and large steel structures which are constructed by high heat input welding such as submerged arc welding, electrogas arc welding or electroslag welding.

### [Brief description of the drawings]

Fig. 1 is a photograph for explaining the macro structure of a cross section of a weld joint with high heat input.
Fig. 2 is a view showing the relationship between P content and MA fraction (vol%)of a HAZ.
Fig. 3 is a view showing the relationship between the MA fraction (vol%) of the HAZ and a vTrs(°C) of the HAZ.

### [Mode for carrying out the Invention]

Firstly, the explanation is made with respect to the microstructures of HAZ adjacent to a bond which features a steel plate of the present invention.

### Volume fraction of MA: 1vol% or less

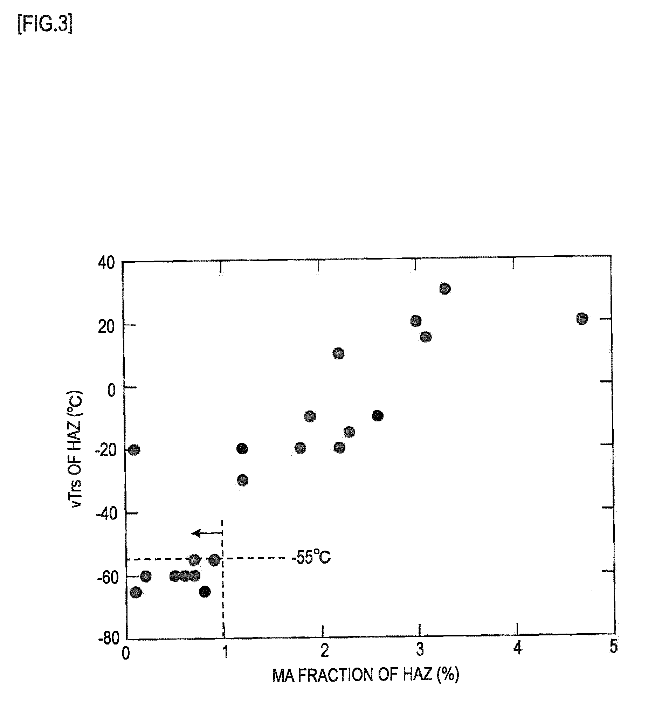

Fig. 3 illustrates the relationship between an MA fraction (vol%) and vTrs (°C) of the HAZ. It is confirmed that the vTrs becomes -55°C or less by decreasing the MA fraction of the HAZ up to 1vol% or less. Here, the toughness level of the HAZ required by the present invention is -55°C or below in terms of vTrs.

As described previously, the present invention is directed to the technique which enhances the toughness of a high heat input weld by suppressing the generation of MA in HAZ of a weld, and the generation of MA in HAZ adjacent to a weld bond which is exposed to the highest temperature and where austenite grains become coarse particularly. To acquire such an effect, it is necessary to suppress a fraction of MA in this coarse grain area (Coarse Grain Heat Affected Zone, CGHAZ) to 1vol% or less. In the present invention, the width of CGHAZ is approximately 500 µm from the bond. The MA of the CGHAZ can be confirmed by grinding and etching a cross section of a weld and by observing the microstructures using an SEM (scanning electron microscope). Here, the microstructures of the CGHAZ consist of acicularferrite and bainite as main components, ferrite, perlite and the above-mentioned MA.

Next, the explanation is made with respect to the composition which the steel plate of the present invention is required to secure high strength while reducing an MA volume fraction to the above-mentioned range.

### C: 0.035 to 0.068 mass%

C is an element for increasing strength of a steel plate.

It is necessary for the steel plate to contain 0.03 mass% or more C to secure required strength for structural use. On the other hand, when C content exceeds 0.08 mass%, MA is liable to be generated. Accordingly, the C content is set to a value which falls within a range of 0.035 to 0.068 mass%.

### Si: 0.01 to 0.15 mass%

Si is an element which is added as a deoxidizing agent in making molten steel, and the addition quantity of 0.01 mass% or more Si is necessary. However, when the Si content exceeds 0.15 mass%, toughness of the base plate is lowered and, moreover, toughness of CGHAZ is also lowered by an increase in MA volume fraction. Accordingly, the Si content is set to a value which falls within a range of 0.01 to 0.15 mass%. The Si content is more preferably set to a value which falls within a range of 0.01 to 0.10 mass%.

### Mn: 2.0 to 2.3 mass%

Mn has an effect of increasing strength of the base plate and, also has an effect of making an untransformed austenite which is generated in the CGHAZ easily decomposed into cementite so as to reduce an MA fraction during cooling after high heat input welding. Accordingly, Mn is an extremely important element in the present invention. To acquire the above-mentioned effect, it is necessary to add 1.8 mass% or more Mn. However, when the Mn content exceeds 2.6 mass%, toughness of the weld is lowered to the contrary. Accordingly, the Mn content is set to a value which falls within a range of 2.0 to 2.3 mass%.

### P: 0.012 mass% or less

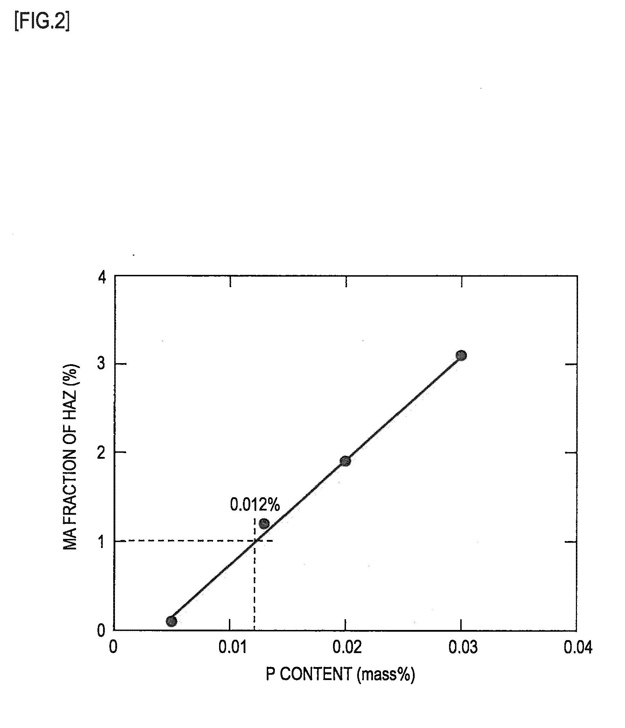

P is an element which makes the decomposition of the untransformed austenite generated in the CGHAZ into cementite difficult during cooling after high heat input welding thus lowering toughness of HAZ. Particularly, when the P content exceeds 0.012 mass%, the above-mentioned adverse effect becomes considerable. Fig. 2 shows an MA fraction of the HAZ of steel plates (No. 3, 17, 18 and 19 in Table 1) in which only the P content is made different. The MA fraction of the HAZ is decreased along with the lowering of the P content, and the MA fraction becomes 1vol% or less when the P content is 0.012 mass% or less.

Accordingly, in the present invention, to suppress the above-mentioned drawback, the P content is limited to 0.012 mass% or less. The P content is preferably set to 0.010 mass% or less. The P content is more preferably set to 0.006 mass% or less.

### S: 0.0005 to 0.0040 mass%

S is an element necessary for generating MnS or CaS as ferrite nucleation sites in HAZ. To acquire such an effect, it is necessary for the steel plate to contain 0.0005 mass% or more S. However, when the S content exceeds 0.0040 mass%, the toughness of the base plate is lowered to the contrary. Accordingly, the S content is set to a value which falls within a range of 0.0005 to 0.0040 mass%. The content of S is more preferably set to a value which falls within a range of 0.0015 to 0.0030 mass%.

### Al: 0.005 to 0.1 mass%

Al is an element which is added for deoxidization of steel. It is necessary for the steel plate to contain 0.005 mass% or more Al. However, when the A1 content exceeds 0.1 mass%, not only the toughness of the parent metal but also toughness of the weld metal are lowered. Accordingly, the content of Al is set to a value which falls within a range of 0.005 to 0.1 mass%. The A1 content is preferably set to a value which falls within a range of 0.01 to 0.1 mass%. The Al content is more preferably set to a value which falls within a range of 0.03 to 0.06 mass%.

### Nb: 0.005 to 0.02 mass%

Nb is an element which is effective for securing strength and toughness of the base plate and strength of a weld joint. When the Nb content is less than 0.003 mass%, the above-mentioned effect is small. On the other hand, when the Nb content exceeds 0.03 mass%, MA are generated in HAZ thus lowering the toughness of the HAZ. Accordingly, the Nb content is set to a value which falls within a range of 0.005 to 0.02 mass%.

### Ti: 0.003 to 0.03 mass%

Ti precipitates as TiN at the time of solidification and suppresses austenite grain growth in HAZ, and also contributes to the increase of HAZ toughness by forming ferrite nucleation sites. To acquire such an effect, it is necessary to add 0.003 mass% or more Ti to the base plate. On the other hand, when the Ti content exceeds 0.03 mass%, precipitated TiN becomes coarse and hence, the above-mentioned advantageous effect cannot be acquired. Accordingly, the content of Ti is set to a value which falls within a range of 0.003 to 0.03 mass%. The content of Ti is more preferably set to a value which falls within a range of 0.005 to 0.02 mass%.

### N: 0.0025 to 0.0070 mass%

N is an element necessary for generating the above-mentioned TiN. To secure a required quantity of TiN, it is necessary for the steel plate to contain 0.0025 mass% or more N. However, when the N content exceeds 0.0070 mass%, a quantity of solid solution N within a region where TiN is dissolved by a welding heat input is increased thus lowering toughness of the weld to the contrary. Accordingly, the N content is set to a value which falls within a range of 0.0025 to 0.0070 mass%. The N content is more preferably set to a value which falls within a range of 0.0040 to 0.0060 mass%.

### B: 0.0003 to 0.0025 mass%

B generates BN in HAZ thus decreasing solute N content and also acts as ferrite nucleation sites and hence, B is an element useful for increasing toughness of the HAZ. To acquire such an effect, it is necessary to add 0.0003 mass% or more B to the base plate. However, when the B content exceeds 0.0025 mass%, hardenability is extremely increased thus causing the deterioration of toughness to the contrary. Accordingly, the B content is set to a value which falls within a range of 0. 0003 to 0.0025 mass%. The B content is more preferably set to a value which falls within a range of 0.0005 to 0.0020 mass%.

### Carbon equivalent C_{eq}: 0.33 to 0.45

In addition that the steel plate of the present invention contains the above-mentioned appropriate compositions, it is also necessary for the base plate to satisfy carbon equivalent expressed by a following formula (1) falls within a range of 0.33 to 0.45.

C_{eq}=C+Mn/6+(Cr+Mo+V) /5+(Cu+Ni) /15 ...... (1)

wherein, the respective element symbols in the formula (1) indicate contents (mass%) of the respective elements.

When the carbon equivalent C_{eq} is less than 0.33, required strength of base plate cannot be acquired. On the other hand, when the carbon equivalent C_{eq} exceeds 0.45, a volume fraction of MA in CGHAZ exceeds 1vol% thus lowering the HAZ toughness. Accordingly, the carbon equivalent C_{eq} is preferably set to a value which falls within a range of 0.37 to 0.42. The carbon equivalent C_{eq} is more preferably set to a value which falls within a range of 0.39 to 0.42.

Further, V can be added to the steel plate of the present invention within a following range in addition to the above-mentioned indispensable components.

### V: 0.2 mass% or less

V precipitates as VN, contributes to the enhancement of strength and toughness of the base plate, and also acts as ferrite nucleation sites and hence, V may be added to the steel plate when necessary. However, the excessive addition of V causes the lowering of toughness to the contrary and hence, an upper limit of V content is preferably set to 0.2 mass%. The V content is more preferably set to 0.1 mass% or less.

In addition to the above-mentioned components, for enhancing the strength of the steel plate of the present invention, one, two or more kinds of components selected from a group consisting of Cu, Ni, Cr and Mo may be further added to the steel plate of the present invention within following ranges. That is, the steel plate of the present invention may further contain 1.0 mass% or less Cu, 1.0 mass% or less Ni, 0.4 mass% or less Cr, and 0.4 mass% or less Mo.

Cu, Ni, Cr and Mo are elements effective for increasing strength of the base plate. To acquire such an effect, an addition quantity of 0.05 mass% or more is necessary with respect to Cu or Ni, and an addition quantity of 0.02 mass% or more is necessary with respect to Cr or Mo. However, when the addition quantity is excessively large in any one of these elements, the element adversely affects the toughness of the base plate. Accordingly, in adding the element to the base plate, the addition quantity is desirably set to 1.0 mass% or less respectively for Cu and Ni, and 0.4 mass% or less respectively for Cr and Mo. The addition quantity is more preferably set to 0. 4 mass% or less for Cu and Ni respectively.

Further, one, two or more kinds of compositions selected from a group consisting of Ca, Mg, Zr and REM can be added to the steel plate of the present invention in addition to the above-mentioned components within following ranges.

### Ca: 0.0005 to 0.0050 mass%

Ca may be added to the steel plate for acquiring an effect of improving the toughness due to fixing of S as both oxide and sulfide. To acquire such an effect, it is necessary to add at least 0.0005 mass% Ca to the steel plate. However, even when Ca is added over 0.0050 mass%, the above-mentioned effect is simply kept in a saturated state. Accordingly, in adding Ca to the steel plate, the content is preferably set to a value which falls within a range of 0.0005 to 0.0050 mass%. The Ca content is more preferably set to a value which falls within a range of 0.0010 to 0.0030 mass%.

### Mg: 0.0005 to 0.0050 mass%, Zr: 0.001 to 0.02 mass%, REM: 0.001 to 0.02 mass%

All of Mg, Zr and REM are elements having an effect of improving the toughness of the steel plate due to the dispersion of oxide. To acquire such an effect, it is necessary to add 0.0005 mass% or more for Mg, and 0.001 mass% for Zr and REM. On the other hand, even when the Mg content exceeds 0. 0050 mass% or Zr REM content exceeds 0.02 mass% respectively, the above-mentioned effect is simply held in a saturated state. Accordingly, in adding these elements, the content of these elements are preferably set to values within the above-mentioned ranges. More preferably, the Mg content is set to a value which falls within a range of 0.0010 to 0.0030 mass%, the Zr content is set to a value which falls within a range of 0.005 to 0.015 mass%, and the REM content is set to a value which falls within a range of 0.005 to 0.015 mass%.

The balance of the steel plate of the present invention other than the above-mentioned compositions is constituted of Fe and unavoidable impurities. However, the inclusion of other elements is not denied provided that contents of other elements are within ranges which do not impede the manner of operation and the advantageous effects of the present invention. For example, 0.005 mass% or less O may be included as an unavoidable impurity. The content of O is more preferably set to 0.003 mass% or less.

Next, the microstructure of high tensile strength steel of the present invention is explained.

The microstructure of high tensile strength steel according to the present invention mainly consists of fine bainite, and an area fraction of fine bainite is preferably set to 60% or more, and more preferably set to 70% or more. When the area fraction of fine bainite is less than 60% so that coarse upper bainite is increased, the toughness of the base plate is lowered. There is particularly no upper limit with respect to the area fraction. The fine bainite of base plate according to the present invention differs from polygonal ferrite or coarse upper bainite.

Here, steel plates of the present invention can be manufactured by a conventionally known method, and there is no particular limit with respect to manufacturing conditions.

For example, the steel plate of the present invention is manufactured as follows. Firstly, molten iron is refined by a converter, followed by RH degassing, and is finally formed into steel slabs through continuous casting or an ingot casting process. The slab is reheated at a temperature of 1250°C or below, is rolled to a predetermined thickness by hot rolling in a temperature range from a heating temperature to 650°C, and is subject to air cooling or accelerated cooling at a cooling rate of 1 to 40°C/s. The cooling is stopped at a temperature of 200°C to 600°C, and then air cooled. Alternatively, the steel plate of the present invention can be manufactured also by a method where, after hot rolling, the plate is subject to direct quenching from a temperature range of 600°C or above, and is subject to tempering at a temperature of 500°C±150°C. Further, the steel plate of the present invention can be manufactured in such a manner that, after hot rolling, the plate is subject to reheating and quenching in a temperature range of 850°C to 950°C, is subject to tempering at a temperature of 500°C±150°C and is subject to reheating and normalizing at a temperature of 1000°C or below and is subject to tempering at a temperature of 650°C or below. Further, the steel plate of the present invention can also be manufactured by conventional hot rolling process with tandem mills. Further, the steel plate of the present invention is either a thick steel plate or a hot-rolled steel plate with thickness of 6mm or more.

Further, a welding method applicable to the steel plate of the present invention is not particularly limited, various types of arc welding, submerged arc welding, electroslag welding, and other welding methods which use other power sources are also applicable to the steel plate of the present invention.

### [Example]

Using a high-frequency melting furnace having capacity of 150kg, steels No. 1 to 25 having the compositions shown in Table 1 were made by melting, and steel ingots were formed by casting and, thereafter, steel slabs having a thickness of 70mm were manufactured by hot rolling. The slabs were heated at a temperature of 1150°C for 2 hours and, thereafter, were subjected to hot rolling with a plate thickness center temperature of 850°C or more thus forming thick steel plates having a plate thickness of 30mm and, thereafter, the thick steel plates were subjected to accelerated cooling such that a cooling rate at the center of plate thickness became 8°C/sec. This accelerated cooling condition simulates a cooling speed at a depth of 1/4t of a thick steel plate having a plate thickness of 60mm at the center of plate thickness of 30mm.

Steel No. 26 and No. 27 in Table 1 contain the substantially same compositions as steels No. 39 and No. 43 in Table 2 of JP-A-2002-256379 (Japanese Patent 3546308 publication) [Patent document 2] filed by the same applicant as the present invention.

Further, with respect to the steels having compositions of No. 2 and No. 5 in Table 1, toughness of the HAZ was evaluated also with respect to steel materials whose base plate strength was enhanced by approximately 150MPa by performing accelerated cooling such that a cooling rate at the center of plate thickness becomes 25°C/sec after hot rolling (steel No. 28 and No. 29 in Table 2 respectively).

Next, annealing heat treatment under a condition of 500°C×10min was applied to the above-mentioned thick steel plates having the thickness of 30mm and, thereafter, round bar tensile specimens having a parallel portion of 14φ×85mm and a gauge length of 70mm were sampled such that the longitudinal direction of the specimen is aligned with the plate width direction from the above-mentioned thick steel plates, and strengths of the base plate (yield stress YS, tensile strength TS) were measured. In addition, 2mm - V-notch Charpy specimens were also sampled from the above-mentioned thick steel plates such that the longitudinal direction of the specimen corresponds to the rolling direction, and a Charpy impact test was properly carried out within a range of -100 to 40°C, and toughness was evaluated by obtaining a fracture transition temperature vTrs which brings about a ductile fracture ratio of 50%.

To evaluate the HAZ toughness, specimens having a width of 80mm, a length of 80mm and a thickness of 15mm were sampled from the above-mentioned thick steel plates. The specimens were subjected to heat treatment where the specimens were heated to a temperature of 1450 °C and, thereafter, the specimens were cooled at a temperature of 800 to 500°C for 270sec. After applying above thermal cycle, 2mm V notch Charpy specimens were sampled, and the toughness were evaluated in the same manner as the above. Here, the above-mentioned heat treatment condition corresponds to a heat cycle of HAZ to which electrogas arc welding with 400 kJ/cm was applied.

Finally, cross sections of the thick steel plates are abraded and, thereafter, MA is exposed by a two-stage etching method. Thereafter, 5 micrographs were taken at a magnification of 2000 times using a SEM, and an imaging analysis was conducted to measure average area fraction of MA. The measured average area fractions were set as MA volume fractions of CGHAZ.

Table 2 shows measurement result of tensile properties and toughness of base plate, MA volume fractions of simulated CGHAZ and toughness of CGHAZ. As can be understood from Table 2, steel plates No. 1 to No. 11, No. 28 and No. 29 which are invention examples exhibit the fraction of martensite islands of 1vol% or less, and all these steel plates exhibit vTrs of HAZ of -55°C or less so that all steel plates acquired the excellent HAZ toughness.

For reference purpose, with respect to the present invention examples, absorbed energies of the simulated CGHAZ at -10°C and -40°C (also expressed vE₋₁₀, vE₋₄₀ respectively) were measured. The absorbed energies vE-₁₀ were 257 to 297J, and vE₋₄₀ were 217 to 242J, respectively. All of these absorbed energies were higher than those disclosed in patent documents 3, 5 and 6. Therefore, it was confirmed that the present invention examples acquired the excellent HAZ toughness.

To the contrary, the steels No. 12 to No. 25, No. 26 and No. 27 (excluding No. 23) are the comparison examples where any one of contents of C, Mn, P, C_{eq} and the other defined elements of the present invention. In those cases, the MA volume fraction exceeded 1vol% whereby vTrs of the simulated CGHAZ deteriorated . Further, the steel No. 22 is also the comparison example where N content was excessively low. In this case, since free B was present excessively in CGHAZ, MA volume fraction increased due to an increase in hardenability. To the contrary, as for the steel No. 23, which is also a comparison example, toughness of simulated CGHAZ deteriorated due to excessive solute N , although the MA volume fraction was less than 1vol%.

Steels No. 26 and No. 27 are the substantially same steels disclosed in Table 2 of JP-A-2002-256379 (Japanese Patent 3546308 publication) as steels No. 39 and No. 43, respectively. (That invention is composed by the same applicants as the present invention.) However, the former are different from the latter with respect to manufacturing conditions, cooling rate after rolling and reduction rate. (Cooling rate after rolling: 8°C/sec and 10°C/sec respectively, Reduction rate: different reduction rates from 70mm to 30mm and from 100mm to 20mm respectively.) As a result of difference from manufacturing conditions, strength of base plates of the present invention is relatively lower than that of the plates of the former invention, although toughness of base plates is substantially at the same level. However, since the MA volume fractions of the HAZ of the steels No. 26 and No. 27 were 1.2vol%, which exceeds the defined value in the present invention, , both steel plates exhibited the low HAZ toughness exhibiting vTrs of -30°C.

The result "vTrs=-30°C" implies that vTrs of the HAZ of these steel materials were deteriorated compared to vTrs of -46°C and -48°C of the HAZ disclosed in Table 3 of [patent document 2] respectively. This is because the peak temperature on simulated thermal cycle applied to the embodiments of the present invention is 1450°C, higher than 1400°C which is the peak temperature disclosed in [patent document 2] (In other words, the condition on the highest heating temperature of this embodiment corresponding to the welding condition of higher heat input quantity.)

The steel No. 28 and No. 29 in Table 2, having the same compositions of No. 2 and No. 5 in Table 1 respectively, are 30mm thick steel plates which were manufactured under rapid accelerated cooling condition,25°C/sec, to enhance tensile strength of base plates by approximately 150MPa. In this case, it was also confirmed that the steel plates also acquired the excellent HAZ toughness regardless of higher strength of the base plate.

### [Industrial Applicability]

According to the present invention, even when high heat input welding exceeding 300 kJ/cm is performed, it is possible to acquire the steel plate which exhibits excellent HAZ toughness. Accordingly, the steel plate of the present invention largely contributes to the enhancement of quality of large steel structure in shipbuilding, a construction field or the like where the steel structures are constructed by high heat input welding such as submerge arc welding, electrogas arc welding or electroslag welding.

**[Table 1-1]**

| No. | chemical component | | | | | | | | | | | | (mass%) | formula (1) * | remarks |
|---|---|---|---|---|---|---|---|---|---|---|---|---|---|---|---|
| | C | Si | Mn | P | S | Al | Nb | Ti | N | B | V, Cu, Ni, Cr, Mo | Ca, Mg, Zr, REM | O | | |
| 1 | 0.044 | 0.03 | 2.42 | 0.006 | 0.0018 | 0.032 | 0.006 | 0.012 | 0.0058 | 0.0009 | - | - | 0.0025 | 0.447 | comparison example |
| 2 | 0.051 | 0.08 | 2 | 0.005 | 0.0024 | 0.037 | 0.01 | 0.013 | 0.0055 | 0.0014 | - | Ca: 0.0022 | 0.0016 | 0.384 | invention example |
| 3 | 0.055 | 0.06 | 2.05 | 0.005 | 0.0022 | 0.04 | 0.01 | 0.011 | 0.0049 | 0.0012 | - | - | 0.0018 | 0.397 | invention example |
| 4 | 0.053 | 0.1 | 1.9 | 0.004 | 0.0019 | 0.039 | 0.012 | 0.013 | 0.0041 | 0.0014 | - | Ca: 0.0025 | 0.0014 | 0.37 | comparison example |
| 5 | 0.048 | 0.11 | 1.86 | 0.01 | 0.0026 | 0.047 | 0.011 | 0.012 | 0.0052 | 0.0013 | Cu: 0.31, Ni:0.40 | - | 0.0019 | 0.405 | comparison example |
| 6 | 0.051 | 0.08 | 1.82 | 0.004 | 0.0019 | 0.036 | 0.01 | 0.013 | 0.0041 | 0.0014 | Cr: 0.12 | Ca: 0.0018 | 0.0023 | 0.378 | comparison example |
| 7 | 0.049 | 0.1 | 1.98 | 0.005 | 0.0021 | 0.055 | 0.011 | 0.011 | 0.006 | 0.0014 | Cr: 0.20 | Mg: 0.0011 | 0.0029 | 0.419 | invention example |
| 8 | 0.045 | 0.07 | 1.85 | 0.008 | 0.0023 | 0.042 | 0.012 | 0.012 | 0.0048 | 0.0012 | Mo: 0.2 | Ca: 0.0021 | 0.0025 | 0.393 | comparison example |
| 9 | 0.035 | 0.12 | 2.13 | 0.006 | 0.0021 | 0.036 | 0.01 | 0.011 | 0.0045 | 0.0012 | V: 0.04 | Zr: 0.009 | 0.0021 | 0.398 | invention example |
| 10 | 0.033 | 0.08 | 2.02 | 0.007 | 0.0019 | 0.055 | 0.025 | 0.008 | 0.0052 | 0.0011 | - | REM: 0.007 | 0.0018 | 0.37 | comparison example |
| 11 | 0.068 | 0.07 | 1.94 | 0.006 | 0.0025 | 0.044 | 0.013 | 0.013 | 0.0042 | 0.0015 | - | Ca: 0.0020 | 0.0016 | 0.391 | comparison example |
| 12 | 0.11 | 0.07 | 1.82 | 0.006 | 0.0023 | 0.042 | 0.012 | 0.013 | 0.0048 | 0.0013 | - | - | 0.0022 | 0.413 | comparison example |
| 13 | 0.052 | 0.31 | 1.75 | 0.005 | 0.0025 | 0.045 | 0.012 | 0.012 | 0.0045 | 0.0012 | - | - | 0.0021 | 0.344 | comparison example |
| 14 | 0.051 | 0.08 | 1.47 | 0.004 | 0.0017 | 0.037 | 0.011 | 0.013 | 0.0047 | 0.0014 | Cr: 0.50 | Ca: 0.0021 | 0.0025 | 0.396 | comparison example |
| 15 | 0.077 | 0.12 | 1.74 | 0.006 | 0.0021 | 0.042 | 0.012 | 0.011 | 0.0051 | 0.0011 | - | - | 0.0022 | 0.367 | comparison example |
| 16 | 0.045 | 0.09 | 2.95 | 0.004 | 0.0019 | 0.032 | 0.012 | 0.011 | 0.0042 | 0.0015 | - | Ca: 0.0020 | 0.0018 | 0.537 | comparison example |
| 17 | 0.051 | 0.08 | 2.02 | 0.013 | 0.0022 | 0.045 | 0.01 | 0.012 | 0.0048 | 0.0012 | - | - | 0.0022 | 0.388 | comparison example |

| | | | | | | | | | | | | | | | |
|---|---|---|---|---|---|---|---|---|---|---|---|---|---|---|---|
| * formula (1) : C_{eq}=C+Mn/6+(Cr+Mo+V)/5+(Cu+Ni)/15 (mass%) | | | | | | | | | | | | | | | |

**[Table 1-2]**

| No. | chemical component | | | | | | | | | | | | (mass%) | formula (1) * | remarks |
|---|---|---|---|---|---|---|---|---|---|---|---|---|---|---|---|
| | C | Si | Mn | P | S | Al | Nb | Ti | N | B | V, Cu, Ni, Cr, Mo | Ca, Mg, Zr, REM | O | | |
| 18 | 0.055 | 0.07 | 2.05 | 0.02 | 0.0023 | 0.037 | 0.011 | 0.013 | 0.0054 | 0.0014 | - | - | 0.0016 | 0.397 | comparison example |
| 19 | 0.052 | 0.06 | 1.98 | 0.03 | 0.0024 | 0.052 | 0.01 | 0.011 | 0.0057 | 0.0011 | - | - | 0.0021 | 0.382 | comparison example |
| 20 | 0.042 | 0.11 | 1.86 | 0.014 | 0.0022 | 0.044 | 0.008 | 0.012 | 0.0052 | 0 | - | Ca: 0.0019 | 0.0021 | 0.352 | comparison example |
| 21 | 0.052 | 0.08 | 1.73 | 0.004 | 0.0017 | 0.038 | 0.01 | 0.013 | 0.0039 | 0.0014 | Cr: 0.82 | Ca: 0.0023 | 0.0023 | 0.504 | comparison example |
| | | | | | | | | | | | | Zr: 0.008 | | | |
| 22 | 0.052 | 0.07 | 1.78 | 0.006 | 0.0014 | 0.037 | 0.011 | 0.008 | 0.0022 | 0.0014 | Mo: 0.3 | Ca: 0.0018 | 0.0025 | 0.409 | comparison example |
| | | | | | | | | | | | | REM: 0.008 | | | |
| 23 | 0.056 | 0.1 | 2.08 | 0.005 | 0.0022 | 0.048 | 0.01 | 0.013 | 0.0075 | 0.0012 | - | - | 0.0016 | 0.403 | comparison example |
| 24 | 0.049 | 0.08 | 1.96 | 0.005 | 0.0022 | 0.051 | 0.033 | 0.012 | 0.0050 | 0.0013 | - | Mg: 0.0012 | 0.0014 | 0.376 | comparison example |
| 25 | 0.048 | 0.11 | 2.00 | 0.005 | 0.0024 | 0.048 | 0.042 | 0.011 | 0.0056 | 0.0011 | - | Mg: 0.0010 | 0.002 | 0.381 | comparison example |
| 26 | 0.11 | 0.08 | 1.25 | 0.015 | 0.0018 | 0.011 | 0.012 | 0.008 | 0.0036 | 0 | Cr: 0.18 | Ca: 0.0018 | 0.0018 | 0.394 | comparison example corresponding to No. 39 in Table 2 of patent document 2 |
| | | | | | | | | | | | Mo: 0.2 | | | | |
| 27 | 0.07 | 0.16 | 1.57 | 0.014 | 0.0027 | 0.022 | 0 | 0.021 | 0.0060 | 0.0005 | Cu: 0.22 | Ca: 0.0014 | 0.0014 | 0.418 | comparison example corresponding to No. 43 in Table 2 of patent document 2 |
| | | | | | | | | | | | Ni: 0.41 | | | | |
| | | | | | | | | | | | Cr: 0.12 | | | | |
| | | | | | | | | | | | Mo: 0.1 | | | | |

| | | | | | | | | | | | | | | | |
|---|---|---|---|---|---|---|---|---|---|---|---|---|---|---|---|
| * formula (1) : C_{eq}=C+Mn/6+(Cr+Mo+V)5+(Cu+Ni)15 (mass%) | | | | | | | | | | | | | | | |

**[Table 2]**

| No. | parent metal YS (MPa) | parent metal TS (MPa) | parent metal vTrs (°C) | HAZ MA fraction * (Vol%) | HAZ vTrs (°C) | HAZ vE-10 (J) | HAZ vE-40 (J) | remarks |
|---|---|---|---|---|---|---|---|---|
| 1 | 502 | 611 | -75 | 0.8 | -65 | 291 | 236 | comparison example |
| 2 | 478 | 589 | -50 | <0.1 | -65 | 286 | 231 | invention example |
| 3 | 466 | 577 | -50 | 0.1 | -65 | 297 | 242 | invention example |
| 4 | 462 | 574 | -70 | 0.2 | -60 | 282 | 227 | comparison example |
| 5 | 481 | 593 | -80 | 0.5 | -60 | 264 | 222 | comparison example |
| 6 | 463 | 573 | -70 | 0.6 | -60 | 261 | 232 | comparison example |
| 7 | 538 | 650 | -60 | 0.9 | -55 | 260 | 217 | invention example |
| 8 | 475 | 582 | -75 | 0.6 | -60 | 270 | 218 | comparison example |
| 9 | 476 | 595 | -55 | 0.7 | -55 | 257 | 217 | invention example |
| 10 | 517 | 625 | -60 | 0.7 | -55 | 275 | 217 | comparison example |
| 11 | 472 | 581 | -70 | 0.7 | -60 | 262 | 236 | comparison example |
| 12 | 451 | 591 | -50 | 2.3 | -15 | | | comparison example |
| 13 | 422 | 523 | -65 | 2.2 | -20 | | | comparison example |
| 14 | 436 | 571 | -55 | 2.2 | 10 | | | comparison example |
| 15 | 458 | 573 | -70 | 1.2 | -20 | | | comparison example |
| 16 | 602 | 725 | -20 | 3 | 20 | | | comparison example |
| 17 | 480 | 590 | -45 | 1.2 | -30 | | | comparison example |
| 18 | 485 | 599 | -45 | 1.9 | -10 | | | comparison example |
| 19 | 491 | 602 | -40 | 3.1 | 15 | | | comparison example |
| 20 | 408 | 515 | -70 | 1.8 | -20 | | | comparison example |
| 21 | 575 | 691 | -15 | 3.3 | 30 | | | comparison example |
| 22 | 482 | 597 | -40 | 4.7 | 20 | | | comparison example |
| 23 | 468 | 574 | -50 | 0.1 | -20 | | | comparison example |
| 24 | 503 | 618 | -60 | 1.8 | -20 | | | comparison example |
| 25 | 514 | 629 | -50 | 2.6 | -10 | | | comparison example |
| 26 | 490 | 605 | -55 | 1.2 | -30 | | | comparison example corresponding to No. 39 in Table 2 of patent document 2 |
| 27 | 475 | 582 | -55 | 1.2 | -30 | | | comparison example corresponding to No. 43 in Table 2 of patent document 2 |
| 28 | 621 | 735 | -60 | <0.1 | -65 | 297 | 240 | invention example |
| 29 | 618 | 720 | -80 | 0.5 | -60 | 275 | 223 | invention example |

| | | | | | | | | |
|---|---|---|---|---|---|---|---|---|
| *MA: martensite island | | | | | | | | |

## Claims

1. A high heat input welding steel material having the composition which contains:
0.035 to 0.068 mass% C,
0.01 to 0.15 mass% Si,
2.0 to 2.3 mass% Mn,
0.012 mass% or less P,
0.0005 to 0.0040 mass% S,
0.005 to 0.1 mass% Al,
0.005 to 0.02 mass% Nb,
0.003 to 0.03 mass% Ti,
0.0025 to 0.0070 mass% N,
0.0003 to 0.0025 mass% B,
optionally 0.2 mass% or less V,
optionally one, two or more kinds of elements selected from a group consisting of 1.0 mass% or less Cu, 1.0 mass% or less Ni, 0.4 mass% or less Cr, and 0.4 mass% or less Mo,
optionally one, two or more kinds of elements selected from a group consisting of 0.0005 to 0.0050 mass% Ca, 0.0005 to 0.0050 mass% Mg, 0.001 to 0.02 mass% Zr, and 0.001 to 0.02 mass% REM,
and Fe and unavoidable impurities as a balance, wherein the composition contains the above-mentioned components such that a carbon equivalent C_{eq} expressed by a following formula (1) falls within a range of 0.33 to 0.45, and martensite islands in the structure of a heat affected zone in the vicinity of a bond when high heat input welding whose welding heat input quantity exceeds 300 kJ/cm is applied is 1vol% or less
C_{eq}=C+Mn/6+(Cr+Mo+V)/5+(Cu+Ni)/15 (1),
wherein the respective element symbols in the formula indicate contents (mass%) of the elements.

## Patentansprüche

1. Stahlmaterial zum Schweißen unter hoher Wärmezufuhr, das die Zusammensetzung aufweist, die Folgendes enthält:
0,035 bis 0,068 Masse-% C,
0.01 bis 0,15 Masse-% Si,
2,0 bis 2,3 Masse-% Mn,
0,012 Masse-% oder weniger P,
0,0005 bis 0,0040 Masse-% S,
0,005 bis 0,1 Masse-% Al,
0,005 bis 0,02 Masse-% Nb,
0,003 bis 0,03 Masse-% Ti,
0,0025 bis 0,0070 Masse-% N,
0,0003 bis 0,0025 Masse-% B,
wahlweise 0,2 Masse-% oder weniger V,
wahlweise eine, zwei oder mehr Arten von Elementen ausgewählt aus der Gruppe bestehend aus 1,0 Masse-% oder weniger Cu, 1,0 Masse-% oder weniger Ni, 0,4 Masse-% oder weniger Cr und 0,4 Masse-% oder weniger Mo,
wahlweise eine, zwei oder mehr Arten von Elementen ausgewählt aus der Gruppe bestehend aus 0,0005 bis 0,0050 Masse.% Ca, 0,0005 bis 0,0050 Masse-% Mg, 0,001 bis 0,02 Masse-% Zr und 0,001 bis 0,02 Masse-% REM,
und Fe und unvermeidliche Verunreinigungen als Rest, wobei die Zusammensetzung die oben erwähnten Komponenten derart enthält, dass ein Kohlenstoffäquivalent C_{äquiv}, durch eine folgende Formel (1) ausgedrückt, innerhalb eines Bereichs von 0,33 bis 0,45 fällt, und Martensitinseln in der Struktur einer wärmebeeinflussten Zone in der Nähe einer Bindung, wenn Schweißen unter hoher Wärmezufuhr, deren Schweißhitzezufuhrmenge 300 kJ/cm übersteigt, angewendet wird, 1 Vol-% oder weniger beträgt
C_{äquiv} = C+Mn/6+(Cr+Mo+V)/5+(Cu+Ni)/15 ...... (1),
wobei die jeweiligen Elementsymbole in der Formel Gehalte (Masse-%) der Elemente angeben.

## Revendications

1. Matériau d'acier apte au soudage avec un apport calorifique élevé présentant la composition qui contient :
0,035 à 0,068 % en masse de C,
0,01 à 0,15 % en masse de Si,
2,0 à 2,3 % en masse de Mn,
0,012 % en masse ou moins de P,
0,0005 à 0,0040 % en masse de S,
0,005 à 0,1 % en masse d'Al,
0,005 à 0,02 % en masse de Nb,
0,003 à 0,03 % en masse de Ti,
0,0025 à 0,0070 % en masse de N,
0,0003 à 0,0025 % en masse de B,
en option 0,2 % en masse ou moins de V,
en option, un, deux ou plusieurs types d'éléments sélectionnés dans un groupe consistant en 1,0 % en masse ou moins de Cu, 1,0 % en masse ou moins de Ni, 0,4 % en masse ou moins de Cr et 0,4 % en masse ou moins de Mo,
en option un, deux ou plusieurs types d'éléments sélectionnés dans un groupe consistant en 0,0005 à 0,0050 % en masse de Ca, 0,0005 à 0,0050 % en masse de Mg, 0,001 à 0,02 % en masse de Zr et 0,001 à 0,02 % en masse de REM,
et Fe et des impuretés inévitables comme un reste, où la composition contient les composants mentionnés ci-dessus de façon qu'un équivalent de carbone C_{eq} exprimé par une formule (1) suivante tombe dans une plage de 0,33 à 0,45, et des ilots de martensite dans la structure d'une zone affectée par la chaleur au voisinage d'une liaison lors du soudage avec un apport calorifique élevé dont la quantité d'apport calorifique élevée de soudage dépasse 300 kJ/cm est appliquée est de 1 % en vol. ou moins
C_{eq}=C+Mn/6+(Cr+Mo+V)/5+(Cu+Ni)/15 (1),
où les symboles des éléments respectifs dans la formule indiquent les teneurs (% en masse) des éléments.
